(19) Europäisches Patentamt
European Patent Office
Office européen des brevets

(11) **EP 3 459 138 B1**

(12) **FASCICULE DE BREVET EUROPEEN**

(45) Date de publication et mention de la délivrance du brevet:
**01.11.2023 Bulletin 2023/44**

(21) Numéro de dépôt: **17798465.5**

(22) Date de dépôt: **19.05.2017**

(51) Classification Internationale des Brevets (IPC):
**H01M 10/54** (2006.01)        **C22B 26/12** (2006.01)
**C22B 7/00** (2006.01)

(52) Classification Coopérative des Brevets (CPC):
**H01M 10/54; C01B 25/45; C22B 7/00; C22B 7/006; C22B 26/12;** H01M 10/052; Y02P 10/20

(86) Numéro de dépôt international:
**PCT/CA2017/050611**

(87) Numéro de publication internationale:
**WO 2017/197528 (23.11.2017 Gazette 2017/47)**

(54) **PROCÉDÉ POUR LE RECYCLAGE DE MATÉRIAUX D'ÉLECTRODE DE BATTERIE AU LITHIUM**

VERFAHREN ZUM RECYCLING VON ELEKTRODENMATERIALIEN EINER LITHIUMBATTERIE

METHOD FOR RECYCLING ELECTRODE MATERIALS OF A LITHIUM BATTERY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.05.2016 US 201662339470 P**

(43) Date de publication de la demande:
**27.03.2019 Bulletin 2019/13**

(60) Demande divisionnaire:
**23199329.6**

(73) Titulaire: **Hydro-Québec**
**Montréal, QC H2Z 1A4 (CA)**

(72) Inventeurs:
• **AMOUZEGAR, Kamyab**
**Mont-Royal**
**Québec H3R 2H9 (CA)**
• **BOUCHARD, Patrick**
**Shawinigan**
**Québec G9N 1B2 (CA)**
• **TURCOTTE, Nancy**
**St-Tite**
**Québec G0X 3H0 (CA)**
• **ZAGHIB, Karim**
**Longueuil**
**Québec J4N 1T8 (CA)**

(74) Mandataire: **Lavoix**
**Bayerstraße 83**
**80335 München (DE)**

(56) Documents cités:
**WO-A1-2012/072619        US-A1- 2013 287 654**

• **LIANG SUN ET AL: "Organic oxalate as leachant and precipitant for the recovery of valuable metals from spent lithium-ion batteries", WASTE MANAGEMENT, ELSEVIER, NEW YORK, NY, US, vol. 32, no. 8, 28 mars 2012 (2012-03-28), pages 1575-1582, XP028503554, ISSN: 0956-053X, DOI: 10.1016/J.WASMAN.2012.03.027 [extrait le 2012-04-04]**
• **BIAN ET AL.: 'A novel process to recycle spent LiFePO4 for synthesizing LiFeP04/C hierarchical microflowers' ELECTROCHIMICA ACTA vol. 190, 19 Décembre 2015, ISSN 0013-4686 pages 134 - 140, XP029418482**
• **SHIN ET AL.: 'A green recycling process designed for LiFePO4 cathode materials for Li-ion batteries' JOURNAL OF MATERIALS CHEMISTRY A vol. 3, no. 21, Avril 2015, pages 11493 - 11502, XP055441237**
• **LI ET AL.: 'Recovery of metals from spent lithium-ion batteries with organic acids as leaching agents and environmental assessment' JOURNAL OF POWER SOURCES vol. 233, 01 Février 2013, ISSN 0378-7753 pages 180 - 189, XP028997691**

• CAI ET AL.: 'Process development for the recycle of spent lithium ion batteries by chemical precipitation' INDUSTRIAL AND ENGINEERING CHEMISTRY RESEARCH vol. 53, 28 Octobre 2014, pages 18245 - 18259, XP055441241

**Description**

**DEMANDE PRIORITAIRE**

La présente demande revendique la priorité, sous la loi applicable, de la demande provisoire américaine no 62/339,470 déposée le 20 mai 2016.

**DOMAINE TECHNIQUE**

Le domaine technique concerne généralement un procédé de recyclage de matériaux d'électrode de batteries au lithium, et plus particulièrement pour le recyclage de batteries au lithium métallique et lithium-ion usées.

**CONTEXTE**

Les piles au lithium sont largement utilisées dans des domaines techniques tels que l'électronique domestique ou la propulsion automobile. Cependant, l'élimination de ces piles au bout de leur vie utile peut être dangereuse en ce qui concerne les considérations relatives à la sécurité et à l'environnement. En outre, des matériaux à coûts élevés impliquent des procédés coûteux pour la fabrication de batteries au lithium. C'est pourquoi il existe un besoin pour le développement de procédés de démontage et de recyclage efficaces des matériaux de batteries au lithium.

De manière générale, les piles déchargées doivent d'abord passer par une étape de désactivation pour minimiser tout danger relié à l'énergie résiduelle stockée. Plusieurs stratégies telles que l'approche cryogénique (Cost of lithium-Ion Batteries for Vehicles, Linda Gaines and Roy Cuenca, Argonne National Laboratory, Septembre 2000) ou la manipulation sous atmosphère inerte ont été utilisées. Le solvant peut être récupéré soit par évaporation, soit par d'autres moyens, tels que l'utilisation de $CO_2$ critique comme solvant (Yuanlong Liu et al., RSC Advances, 2014, 97, 54525-54531 ; et brevet US No 8,067,107.

Une fois la désactivation assurée, les étapes de broyage et de déchiquetage suivies des opérations de tri et de tamisage permettent une séparation mécanique du boîtier extérieur, du séparateur et des électrodes des batteries au lithium. La séparation du matériau d'électrode et de la feuille du collecteur de courant est effectuée soit par dissolution du liant dans un solvant approprié (Tong Dongge et al., Journal of Chemical Industry and Engineering (CHINA), 2005, 56, 10, 4) tel que la N-méthyl-2-pyrrolidone (NMP), par exemple, ou par sa décomposition thermique à haute température.

À l'heure actuelle, il existe deux approches principales pour la récupération des matériaux actifs d'électrode, également appelés matériaux électrochimiquement actifs. La première est basée sur des techniques pyro-métallurgiques, dans lesquelles les constituants de la batterie sont soumis à des températures très élevées afin de récupérer des éléments tels que le cobalt, le nickel ou le manganèse, et où, jusqu'à présent, le lithium et l'aluminium ne sont pas récupérés (Life-cycle analysis for Lithium-ion batteries production and recycling, Linda Gaines, John, 90th Annual Meeting of the Transportation Research Board, Washington D.C, Janvier 2011).

L'autre approche est basée sur des techniques hydro-métallurgiques, principalement le lessivage (ou lixiviation) acide, suivi d'étapes d'extraction et/ou de précipitation. Les agents de lixiviation connus utilisés dans les procédés classiques sont l'acide chlorhydrique (P. Zhan et al., Hydrometallurgy, 47 (1998) 259-271), un mélange d'acide sulfurique et de peroxyde d'hydrogène (D.P. Mantuano et al., J. Power Sources, 159 (2006) 1510-1518), ou un mélange d'acide nitrique et de peroxyde d'hydrogène (C.K. Lee, K.I. Rhee, Hydrometallurgy, 68 (2003) 5-10).

Le principal inconvénient des techniques hydro-métallurgiques actuellement proposées est que l'utilisation d'acides forts pour la lixiviation entraîne la dissolution non sélective de tous les composants actifs d'électrodes (c'est-à-dire le lithium et les métaux de transition). Ceci implique la nécessité de plusieurs étapes supplémentaires d'extraction et/ou de précipitation (S. Castillo et al., Journal of Power Sources, 112 (2002) 247-254) afin de récupérer chaque élément. De plus, les acides forts mentionnés ci-dessus doivent être utilisées à haute concentration et à des températures relativement élevées. Dans le cas de l'acide chlorhydrique, la manipulation du chlore libéré implique aussi des coûts d'exploitation plus élevés ainsi que des problèmes environnementaux supplémentaires.

Lorsque le $LiFePO_4$ est mis en contact avec une solution de $H_2SO_4$ (4M) à 75 °C en présence de $H_2O_2$, la totalité de la matière active d'électrode est dissoute sous forme de sulfate de lithium et de fer. Ceci implique des étapes supplémentaires pour la précipitation sélective du fer, habituellement par ajustement du pH (impliquant l'utilisation de quantités importantes d'hydroxydes pour neutraliser l'excès d'acide), suivie d'une récupération du lithium, habituellement par addition d'un carbonate tel que le carbonate de sodium ou sa conversation en hydroxyde de lithium. Le seul cas rapporté d'extraction sélective de lithium à partir de matériau usé d'électrode est basé sur l'utilisation de l'acide oxalique, impliquant également l'utilisation d'un réactif relativement coûteux. La méthode doit aussi être exécutée à température élevée (c'est-à-dire à 80°C) (J.S. Sohn et al., Advanced Processing of Metals and Materials, Sohn International Symposium, Proceedings, San Diego, CA, USA, 27-31 août 2006 (2006), Vol. 6, 135-143).

US 2013/287654 concerne un procédé pour le recyclage d'un matériau électrochimiquement actif comprenant une réaction du matériau électrochimiquement actif avec un acide faible (pH 4-7) et un agent oxydant ou un agent réducteur, comme le peroxyde d'hydrogène, l'ozone ou $CO_2$. Cependant, l'approche proposée est basée sur la dissolution de tous les éléments de transition, suivie de leur précipitation séquentielle.

Par conséquent, comme on peut le voir, les approches classiques pour le recyclage de matériaux actifs d'électrodes usées de piles au lithium ne sont pas sélectives et impliquent l'utilisation de réactifs assez corrosifs, de conditions à haute température et la formation de plusieurs sous-produits, ce qui entraîne des coûts de recyclage plus élevés.

Il existe donc un besoin pour un procédé de recyclage impliquant des réactifs moins agressifs, des conditions non critiques et/ou permettant le recyclage sélectif du matériau actif de l'électrode.

## SOMMAIRE

L'invention est exposée dans le jeu de revendications joint.

Selon un premier aspect, la présente se réfère à un procédé pour le recyclage d'un matériau électrochimiquement actif. Le procédé comprend les étapes de : (a) réaction du matériau électrochimiquement actif avec un agent oxydant ou un agent réducteur dans un solvant (par exemple, un solvant aqueux), pour produire un sel de lithium et un précipité de précurseur de matériau électrochimiquement actif; (b) séparation du précipité de précurseur de matériau électrochimiquement actif du sel de lithium; et (c) régénération du matériau électrochimiquement actif à partir du précurseur de matériau électrochimiquement actif, dans lequel le matériau électrochimiquement actif est $LiFePO_4$ et le précurseur du matériau électrochimiquement actif est $FePO_4$. Selon un mode de réalisation, le solvant est l'eau.

Selon un mode de réalisation, l'étape (a) comprend en outre l'injection de $CO_2$ gazeux afin d'augmenter la solubilité du sel de lithium dans le solvant. Selon un autre mode de réalisation, l'étape (c) comprend le chauffage du sel de lithium pour récupérer le $CO_2$ gazeux et un sel de lithium recyclé. Selon un autre mode de réalisation, l'agent oxydant comprend du peroxyde d'hydrogène, ou de l'ozone, ou encore de l'oxygène. L'agent oxydant peut également comprendre un sel de persulfate.

Selon un exemple, l'étape (c) comprend également la soumission du sel de lithium à une électrolyse, une solution d'un sel de sodium, ou une injection de $CO_2$ afin de récupérer un sel de lithium recyclé. Dans certaines instances, le sel de lithium ainsi récupéré est utilisé pour régénérer le matériau électrochimiquement actif.

Selon un autre aspect, la présente technologie se réfère aussi à une méthode pour le recyclage de matériau d'électrode de batteries au lithium, dans laquelle le matériau d'électrode usé séparé est mis en suspension dans un milieu aqueux et réagi avec du $CO_2$ en présence d'un agent oxydant ou réducteur afin de séparer sélectivement et efficacement le contenu en lithium en tant que bicarbonate de lithium et de récupérer le reste du matériau actif d'électrode comme solide par une méthode de séparation. La phase liquide séparée est alors traitée pour récupérer le contenu en lithium qui sera recyclé dans la fabrication de nouveau matériau d'électrode avec les autres éléments de matériau d'électrode récupérés de la phase solide.

Selon cet aspect, la pression en $CO_2$ dans le réacteur peut varier entre 1 et 10 atmosphères, mais plus préférentiellement entre 1 et 5 atmosphères. Le mélange réactionnel peut être refroidi en deçà de la température ambiante afin d'augmenter la solubilité du bicarbonate de lithium. La réaction est effectuée entre 10 et 30 °C, par exemple, entre 20 et 25 °C.

Selon un autre mode de réalisation, l'agent oxydant ou réducteur est le peroxyde d'hydrogène, qui est utilisé en quantités stoechiométriques ou faiblement en excès par rapport au métal de transition à être oxydé ou réduit.

Selon un exemple, la phase solide séparée contient du $FePO_4$ de pureté élevée, le $FePO_4$ maintenant sa structure crystalline, permettant ainsi sa réutilisation dans la fabrication de nouveau matériau d'électrode.

Selon un mode de réalisation, une fois la phase solide séparée, la phase liquide est chauffée à températures élevées, de préférence d'environ 90 °C, afin de récupérer le lithium sous forme de précipité de carbonate de lithium. Le précipité de carbonate de lithium est ensuite séché et réutilisé dans la fabrication de matériau d'électrode, et le $CO_2$ gazeux libéré et la solution contenant du carbonate et/ou du bicarbonate de lithium résiduels sont recyclés dans la réaction avec d'autres matériaux d'électrode usés.

Selon un autre aspect, la présente demande décrit aussi une méthode pour le recyclage de matériau d'électrode de batteries au lithium, dans laquelle le matériau d'électrode usé séparé est mis en suspension dans un milieu aqueux et réagi avec du $Li_2S_2O_8$ pour extraire le lithium du matériau d'électrode, sous forme de sulfate de lithium dans la phase liquide, l'oxyde de métal de transition demeurant dans la phase solide. La phase solide est séparée par un procédé de séparation conventionnel et réutilisée pour la formation d'un nouveau matériau d'électrode. La phase liquide est alors séparée en deux fractions. L'une est utilisée comme matériau ajouté à l'anolyte d'une cellule électrolytique dans laquelle le sulfate de lithium est réoxydé au persulfate de lithium, qui sera utilisé à nouveau pour traiter d'autres matériaux d'électrode de batterie usée. L'autre fraction de la phase liquide contenant du sulfate de lithium sera utilisée pour récupérer du lithium sous forme d'autres sels tels que le carbonate de lithium (en utilisant du $CO_2$ ou un autre sel de carbonate tel que le carbonate de sodium $Na_2CO_3$) ou de l'hydroxyde de lithium LiOH par électrolyse de dissociation de sel.

Selon un mode de réalisation, la réaction est effectuée entre 5 et 60°C, ou entre 20 et 40°C, puisqu'à des températures plus élevées, le persulfate sera moins stable.

Selon un autre mode de réalisation, la première fraction de la phase liquide contenant du sulfate de lithium est convertie en hydroxyde de lithium et en acide sulfurique par électrolyse. Le LiOH est ensuite réagi avec du persulfate d'ammonium pour produire du persulfate de lithium, lequel est utilisé pour traiter d'autres matériaux d'électrode de batterie usée.

Selon un autre mode de réalisation, la réaction entre LiOH et $(NH_4)_2S_2O_8$ est effectuée sous vide pour faciliter l'élimination de $NH_3$ gazeux lequel est recyclé dans la formation de sulfate d'ammonium qui, à son tour, est ensuite ajouté à l'anolyte d'une cellule électrolytique pour produire du persulfate d'ammonium.

## BRÈVE DESCRIPTION DES DESSINS

La Figure 1 est une représentation schématique d'un procédé selon un mode de réalisation.

La Figure 2 montre un diagramme de diffraction des rayons-X d'un échantillon soumis au procédé selon un mode de réalisation.

La Figure 3 est une représentation schématique d'un procédé selon un autre mode de réalisation.

La Figure 4 montre l'efficacité de la lixiviation pour différents types de matériaux actifs en fonction du temps conformément à l'Exemple 1 de la description.

La Figure 5 montre l'efficacité de la lixiviation pour différents types de matériaux actifs en fonction du temps conformément à l'Exemple 2 de la description.

La Figure 6 montre l'efficacité de la lixiviation pour différents types de matériaux actifs en fonction du temps conformément à l'Exemple 3 de la description.

La Figure 7 montre l'efficacité de la lixiviation pour différents types de matériaux actifs en fonction du temps conformément à l'Exemple 5 de la description.

La Figure 8 montre l'efficacité de la lixiviation pour différents types de matériaux actifs en fonction du temps conformément à l'Exemple 6 de la description.

La Figure 9 montre l'efficacité de la lixiviation pour différents types de matériaux actifs en fonction du temps conformément à l'Exemple 7 de la description.

La Figure 10 montre l'efficacité de la lixiviation pour différents types de matériaux actifs en fonction du temps conformément à l'Exemple 8 de la description.

## DESCRIPTION DÉTAILLÉE

Cette demande concerne un procédé pour le recyclage de matériaux électrochimiquement actifs de batteries au lithium. Plus particulièrement, l'objet de la présente demande concerne la récupération des composants électrochimiquement actifs du matériau d'électrode une fois qu'il a été séparé du reste des éléments de la batterie.

De nouvelles approches qui permettent de réaliser une extraction sélective du composant lithium à partir du matériau d'électrode électrochimiquement actif, sans l'utilisation de conditions d'acide fort ou de haute température, sont présentées ci-après.

Dans un premier aspect, un matériau d'électrode récupéré à partir de la séparation des composants de la batterie et comprenant le matériau électrochimiquement actif est mis en contact avec un agent oxydant ou un agent réducteur contenu dans un solvant, éventuellement en présence de $CO_2$. Cette étape exclue la présence d'un acide fort tel que l'acide chlorhydrique, sulfurique, nitrique, etc. Le choix de l'agent oxydant ou réducteur dépend du type de matériau d'électrode utilisé. Le présent procédé peut être adapté au recyclage de matériau de cathode ou au recyclage de matériau d'anode. La première étape du procédé est donc la réaction du matériau électrochimiquement actif avec un agent oxydant ou un agent réducteur dans un solvant. Ceci produit un sel de lithium et un précipité de précurseur de matériau électrochimiquement actif (c'est-à-dire, un matériau électrochimiquement actif dé-lithié, totalement ou en partie), appelé ci-après précipité de précurseur. Dans un mode de réalisation, le mélange comprenant le matériau électrochimiquement actif est dispersé dans le solvant. Dans un mode de réalisation préféré, le solvant est de l'eau, et le sel de lithium produit est en solution.

Le matériau électrochimiquement actif peut être un oxyde, un oxyde complexe, un phosphate, un silicate, etc. Selon l'invention, le matériau électrochimiquement actif est $LiFePO_4$, ou tout autre matériau électrochimiquement actif connu de la personne versée dans l'art. Dans le cas de $LiFePO_4$, le précipité de précurseur formé est $FePO_4$. Le sel de lithium produit peut être du $LiHCO_3$, ou $Li_2SO_4$, par exemple. Un exemple d'agent oxydant utile est le peroxyde d'hydrogène ($H_2O_2$). D'autres agents oxydants peuvent être utilisés, tels que l'oxygène ($O_2$), l'ozone ($O_3$), l'air, etc. La personne du domaine reconnaîtra que le peroxyde d'hydrogène peut être utilisé à la fois comme agent oxydant ou réducteur. L'agent oxydant ou réducteur peut être utilisé en quantités stoechiométriques ou légèrement en excès (c'est-à-dire, un excès de 5% en moles à 10% en moles) par rapport au métal de transition à être oxydé ou réduit. La personne versée dans l'art appréciera que l'agent oxydant ou réducteur puisse par contre être utilisé en plus grand excès.

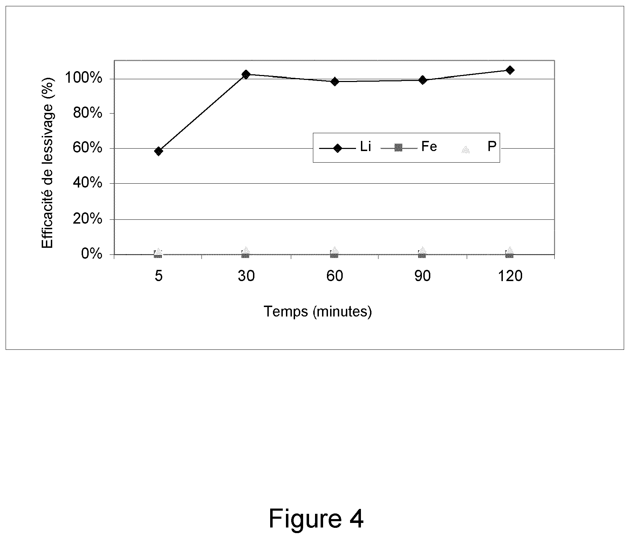

La première étape de réaction du procédé peut également comprendre l'injection de $CO_2$ dans la solution. Le $CO_2$ est barboté dans la solution et augmente la solubilité du sel de lithium dans le solvant. Ceci augmente, par le fait même, l'efficacité de la lixiviation du procédé. Par exemple, tel qu'illustré à la Figure 4, il a été découvert que, lorsqu'une poudre contenant du $LiFePO_4$ réagit avec une solution aqueuse contenant un agent oxydant comme le $H_2O_2$, en présence de $CO_2$ barboté, le lithium peut être lixivié avec des taux d'extraction allant jusqu'à 100% à partir de la poudre, de manière très sélective, par exemple, moins de 1% du fer Fe ou 4% du phosphore P est extrait avec le lithium. Le précipité de précurseur contenu dans la phase solide maintient, en très grande partie ou entièrement, sa structure cristalline pendant l'étape réactionnelle.

Etant donné que la cinétique de réaction entre le matériau électrochimiquement actif et l'agent oxydant ou réducteur est assez rapide à température ambiante, des conditions de haute température ne sont pas nécessaires. Le mélange réactionnel peut être refroidi en dessous de la température ambiante afin d'augmenter la solubilité du bicarbonate de lithium. Toutefois, pour des raisons économiques, la réaction peut être effectuée entre 10 et 30 °C, ou entre 20 et 25 °C. En fait, à des températures plus élevées, la solubilité du sel de lithium (par exemple, le carbonate de lithium) diminue, ce qui nécessite des réacteurs de volume supérieur et une récupération de lithium plus faible. La réaction peut être effectuée dans un réacteur à la pression atmosphérique ou à une pression plus élevée. Il a été observé que la solubilité du sel de lithium s'accroît avec une augmentation de la pression en $CO_2$. Cependant, à des pressions supérieures à 10 atm., la solubilité commence à atteindre un plateau et il n'y a que peu de gain de solubilité. Par conséquent, la pression de réaction sera de préférence comprise entre 1 et 10 atm.

Dans une deuxième étape, le mélange de sel de lithium et de précipité de précurseur produit est soumis à une séparation. Etant donné que le précipité du précurseur reste solide pendant la réaction, il peut être séparé de la solution de sel de lithium par toute technique de séparation connue de la personne versée dans l'art, par exemple, par filtration ou centrifugation.

Une fois le précipité de précurseur et le sel de lithium séparés, le procédé comprend la régénération du matériau électrochimiquement actif à partir dudit précipité de précurseur.

Par conséquent, dans un mode de réalisation de la présente technologie, le procédé de recyclage comprend une étape de régénération. Le précipité de précurseur récupéré dans l'étape de séparation est utilisé pour la fabrication de nouveaux matériaux de lithium électrochimiquement actifs. Dans certains modes de réalisation, l'étape de régénération comprend également la récupération du lithium compris dans le sel de lithium. La récupération du lithium implique le chauffage du sel de lithium récupéré lors de la séparation pour produire un sel de lithium recyclé, du $CO_2$ gazeux et une solution résiduelle de sel de lithium. Le sel de lithium peut être chauffé à une température de 50°C à 100°C, de préférence à une température de 85°C à 95°C. Dans certains modes de réalisation, le sel de lithium est chauffé à température élevée, de préférence à environ 90 °C. Le sel de lithium recyclé est ensuite utilisé dans la fabrication de nouveaux matériaux électrochimiquement actifs, et le $CO_2$ gazeux récupéré peut être réinjecté à la première étape de réaction du présent procédé. Enfin, la solution résiduelle de sel de lithium peut également être réintroduite dans le mélange réactionnel de la première étape précédemment mentionnée.

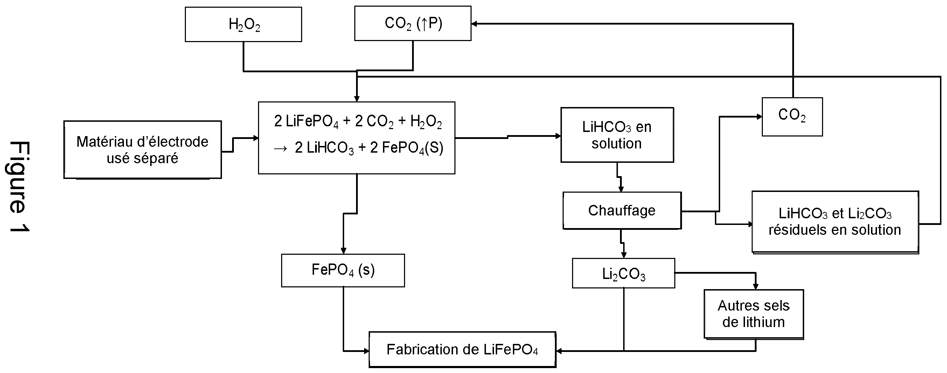

Dans un mode de réalisation du procédé, illustré à la Figure 1, le mélange d'électrode récupéré d'un matériau de cathode, lequel comprend le matériau électrochimiquement actif $LiFePO_4$, est dispersé dans une solution aqueuse contenant du peroxyde d'hydrogène $H_2O_2$ et est traité avec du $CO_2$, lequel est barboté dans la suspension. Dans ce cas, le peroxyde d'hydrogène ($H_2O_2$) agit comme agent oxydant sur le $LiFePO_4$ et le lithium contenu à l'intérieur est lixivié sous forme de bicarbonate de lithium ($LiHCO_3$) selon l'équation suivante :

$$2\,LiFePO_4\,(S) + H_2O_2 + 2\,CO_2 \rightarrow 2\,LiHCO_3 + 2\,FePO_4\,(S) \quad (\text{éq. 1})$$

Le sel de lithium est récupéré dans la phase liquide sous forme de bicarbonate de lithium, qui peut être recyclé en tant que sel de lithium, par exemple sous forme de précipité solide de carbonate de lithium ($Li_2CO_3$) sans addition

de tout autre réactif chimique.

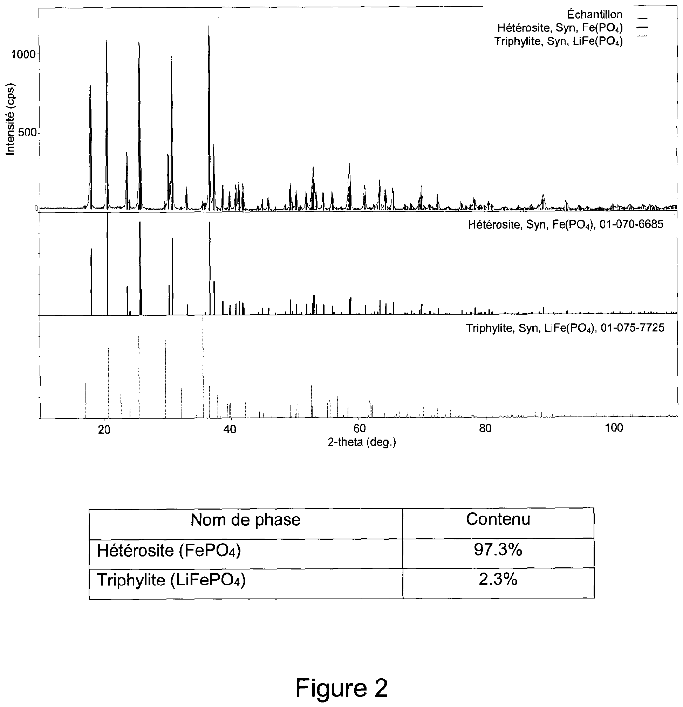

Le phosphate de fer ($FePO_4$) formé lors de la première étape de réaction reste sous forme solide et peut être séparé de la suspension. Une analyse par diffraction des rayons X montre que la structure cristalline de $FePO_4$ reste intacte, de sorte que ce matériau peut être facilement retourné à la fabrication de nouveaux matériaux de cathode de $LiFePO_4$. Par exemple, la Figure 2 montre le spectre de diffraction des rayons X, ainsi que le tableau de la teneur résultante, d'un échantillon soumis à une extraction de lithium en utilisant du $CO_2$ et du $H_2O_2$, telle qu'ici décrite. Le solide séparé par filtration montre une teneur de 97.3% en $FePO_4$ et une teneur de 2.3% en $LiFePO_4$. La solution séparée de sel de lithium contenant du bicarbonate de lithium $LiHCO_3$ peut ensuite être chauffée dans un précipitateur pour récupérer le carbonate de lithium solide $Li_2CO_3$, selon l'équation suivante :

$$2LiHCO_3 \rightarrow Li_2CO_3\ (S) + H_2O + CO_2\uparrow \quad (\text{éq. 2})$$

Tel qu'illustré à la Figure 1, le carbonate de lithium et le bicarbonate de lithium résiduels, ainsi que le $CO_2$ libéré, peuvent être réintroduits à la première étape de réaction (ou l'étape de carbonatation) pour le traitement de matériau usé d'électrode. Alternativement, le bicarbonate de lithium peut être converti en sels de lithium autres que le carbonate de lithium. De tels sels de lithium peuvent comprendre n'importe quel sel de lithium connu de la personne versée dans l'art, dépendamment de l'application. Le phosphate de fer, le carbonate de lithium, ou d'autres sels de lithium potentiels récupérés de l'étape de régénération, peuvent être utilisés dans la fabrication de nouveaux matériaux électrochimiquement actifs d'électrode comprenant du $LiFePO_4$, par exemple, pour utilisation dans des batteries au lithium.

Dans un autre aspect de la présente technologie, le matériau d'électrode récupéré à partir de la séparation des composants de la batterie et comprenant le matériau électrochimiquement actif est mis en contact avec un agent oxydant ou réducteur contenu dans un solvant. L'agent oxydant peut être un sel de persulfate. Cette mise en contact produit un sel de lithium et un précipité de précurseur de matériau électrochimiquement actif (précipité de précurseur). Dans un mode de réalisation, le mélange comprenant le matériau électrochimiquement actif est dispersé dans le solvant. Le solvant peut être de l'eau, de sorte que le sel de lithium soit récupéré sous forme de solution de sel de lithium. La réaction est effectuée entre 5 °C et 60 °C, mais plus particulièrement entre 20 °C et 40 °C. En effet, à des températures plus élevées, le persulfate sera moins stable.

Dans un mode de réalisation, le sel de lithium produit lors de la première étape de réaction est hautement soluble dans le solvant, de sorte qu'il n'est pas nécessaire d'utiliser du $CO_2$ pour augmenter la solubilité du sel de lithium.

Tel que décrit précédemment, le sel de lithium et le précipité de précurseur produits dans l'étape réactionnelle sont soumis à une étape de séparation. Puisque le précipité de précurseur reste à l'état solide pendant la réaction, il peut être séparé de la solution de sel de lithium par filtration, centrifugation, etc.

Après l'étape de séparation, le procédé comprend la régénération du matériau électrochimiquement actif à partir du précipité de précurseur, qui peut être directement utilisé dans la fabrication de nouveaux matériaux électrochimiquement actifs.

Dans certains modes de réalisation, l'étape de régénération comprend également la récupération du lithium compris dans le sel de lithium. Pour ce faire, le sel de lithium récupéré à partir de l'étape de séparation est soumis à une électrolyse, un sel de sodium ou du $CO_2$.

Dans certains modes de réalisation, une partie du sel de lithium est récupérée sous forme de sel de persulfate et réutilisée comme agent oxydant ou réducteur dans la première étape réactionnelle. Le reste du sel de lithium récupéré peut être converti en d'autres sels de lithium tels que le carbonate de lithium (en utilisant du $CO_2$ ou du carbonate de sodium) ou de l'hydroxyde de lithium (par électrolyse) afin d'être réutilisé dans la fabrication de matériaux électrochimiquement actifs de batterie au lithium (tels que $LiFePO_4$).

Dans un mode de réalisation, de l'hydroxyde de lithium peut être utilisé pour produire du persulfate de lithium ($Li_2S_2O_8$) par sa réaction avec le persulfate d'ammonium (($NH_4)_2S_2O_8$). L'ammoniac ($NH_3$) libéré peut être récupéré pour former le sulfate d'ammonium (($NH_4)_2SO_4$) par réaction avec l'acide sulfurique obtenu à partir de l'électrolyse du sulfate de lithium ($Li_2SO_4$). Le sulfate d'ammonium formé de cette manière peut facilement être transformé en persulfate d'ammonium par son électrolyse directe.

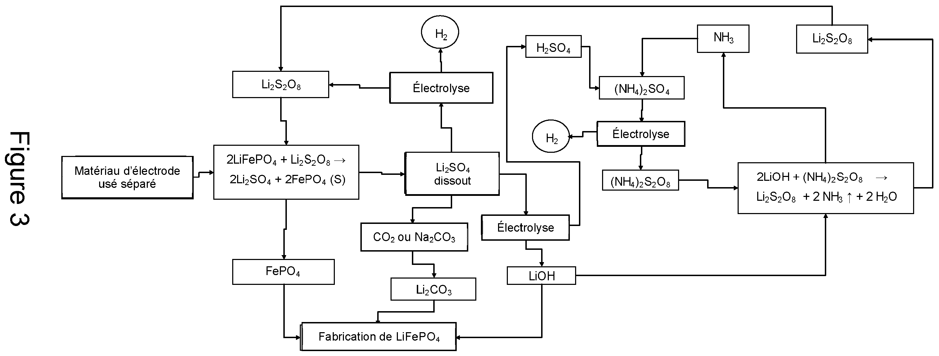

Dans un mode de réalisation préféré, illustré à la Figure 3, une suspension de matériau usé d'électrode comprenant du $LiFePO_4$ est traitée avec une solution aqueuse de persulfate de lithium, ce qui conduit à la lixiviation sélective et complète du lithium sous forme de sulfate de lithium $Li_2SO_4$. Comme l'illustre la Figure 4, le procédé résulte en moins de 1% de lessivage du fer. Le phosphate de fer reste principalement sous la forme de solide en suspension selon la réaction suivante :

$$2\ LiFePO_4\ (S) + Li_2S_2O_8 \rightarrow 2\ Li_2SO_4 + 2\ FePO_4\ (S) \quad (\text{éq. 3})$$

En ce qui concerne la Figure 3, le phosphate de fer formé au cours de la première étape réactionnelle demeure sous forme solide, lequel peut être séparé de la suspension et facilement réutilisé dans la fabrication de nouveaux matériaux de cathode de LiFePO$_4$. La solution de sulfate de lithium est alors recyclée afin de produire d'autres sels de lithium tels que le carbonate de lithium (par ajout de carbonate de sodium ou utilisation de CO$_2$), ou l'hydroxyde de lithium, par électrolyse dans une opération de dissociation de sel. Tel qu'illustré à la Figure 3, l'électrolyse du sulfate de lithium produit l'hydroxyde de lithium et l'acide sulfurique. De plus, une partie du sel de lithium obtenu peut être utilisé pour régénérer le persulfate de lithium, et réintroduit dans le procédé. La régénération du persulfate de lithium peut se faire par électrolyse directe du sulfate de lithium du côté anodique d'une cellule électrolytique adaptée à la production de persulfate. Le persulfate de lithium peut aussi être régénéré par la réaction entre une partie du LiOH et du persulfate d'ammonium produits, selon la réaction suivante:

$$2\ LiOH + (NH_4)_2S_2O_8\ \rightarrow\ Li_2S_2O_8 + 2\ NH_3\uparrow\quad (\text{éq. 4})$$

La réaction ci-dessus est effectuée sous vide, et de préférence avec un gaz inerte barbotant dans la solution, afin d'évacuer rapidement l'ammoniac gazeux libéré et de minimiser sa réaction avec le persulfate d'ammonium. L'ammoniac peut être recyclé et utilisé dans la formation de sulfate d'ammonium par sa réaction avec l'acide sulfurique formé durant la transformation électrolytique du sulfate de lithium en hydroxyde de lithium. Le sulfate d'ammonium est alors utilisé dans la production électrolytique de persulfate d'ammonium qui est alors utilisé pour produire du persulfate de lithium selon l'équation 4.

Les exemples qui suivent sont à titre illustratifs et ne devraient en aucun cas être interprétés afin de limiter la portée de l'invention telle que décrite dans la présente demande.

## EXEMPLES

### Exemple 1

Afin de simuler l'application des conditions proposées de lixiviation (ou lessivage) basées sur l'utilisation de CO$_2$ gazeux et d'un agent oxydant, un nouveau matériau de cathode contenant principalement du LiFePO$_4$ avec de petites quantités de fluorure de polyvinylidène (PVDF) et de graphite a été utilisé pour représenter le matériau d'électrode usé récupéré. Une partie de ce matériau a été dispersé dans 100 parties d'une solution aqueuse contenant 0,5 % en poids de H$_2$O$_2$ dans un réacteur agité, du CO$_2$ gazeux étant barboté dans la solution aqueuse, sous une pression de 30 psi, et à 25 °C. Le rapport molaire LiFePO$_4$/H$_2$O$_2$ était donc de 2,77. Des échantillons ont été prélevés toutes les 30 minutes et la concentration de Li, Fe et P dans la solution a été déterminée par analyse par plasma à couplage inductif (ICP). Les résultats ont ensuite été utilisés pour calculer l'efficacité de lixiviation du procédé envers chaque élément. Ces résultats sont présentés à la Figure 4. Il a été constaté qu'après 30 minutes, tout le contenu en lithium du matériau d'électrode avait été dissout sous forme de bicarbonate de lithium tandis que moins de 0,5% du fer et 3,5% du phosphore ont été extraits. Ceci démontre les très grandes sélectivité et efficacité du présent procédé pour la lixiviation du lithium.

Lorsque la même réaction a été effectuée en présence du même rapport LiFePO$_4$/H$_2$O$_2$ mais en l'absence de CO$_2$, seulement 3% du lithium a été extrait. De plus, lorsque le CO$_2$ seul est utilisé pour traiter le matériau d'électrode, même à une pression en CO$_2$ de 75 psi, seulement 12% du lithium a été extrait (voir le tableau 1 ci-dessous). Ces résultats démontrent que la présence de CO$_2$ et de H$_2$O$_2$ est essentielle à l'efficacité élevée de la lixiviation du lithium. Dans tous les cas, l'extraction est très sélective vis-à-vis du lithium, comme en témoigne l'efficacité de lixiviation pour Li et Fe dans le tableau 1.

Tableau 1

| Conditions de lixiviation | Efficacité de lixiviation de Li (%) | Efficacité de lixiviation de Fe (%) |
|---|---|---|
| Lixiviation avec H$_2$O$_2$ | 3% | < 0,1% |
| Lixiviation avec CO$_2$ | 12% | 0,2% |
| Lixiviation avec CO$_2$ et H$_2$O$_2$ | 100% | 0,3% |

### Exemple 2

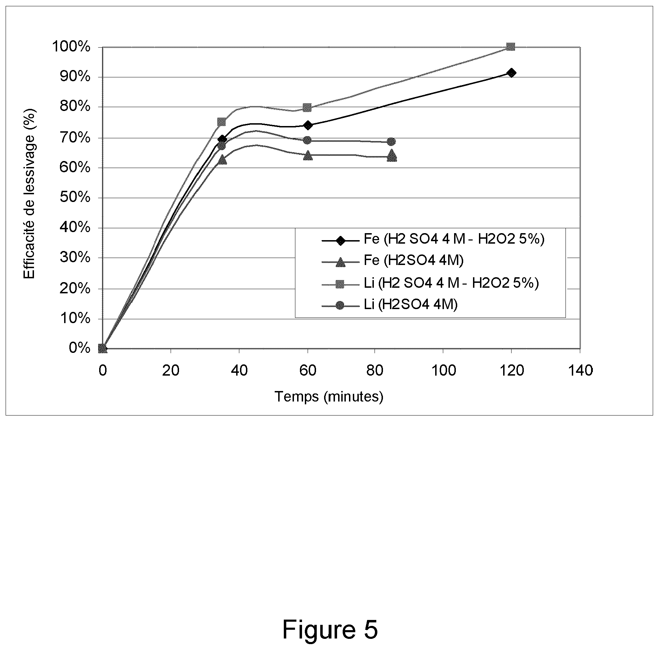

Pour fins de comparaison, la même réaction a été effectuée avec de l'acide sulfurique au lieu du CO$_2$. Une partie d'un matériau de cathode contenant du LiFePO$_4$ a été ajoutée à une solution aqueuse de H$_2$SO$_4$ à 4M sous deux conditions différentes, l'une en présence de 5% en poids de $H_2O_2$ et l'autre en l'absence de $H_2O_2$. Dans les deux cas la suspension a été chauffée à 75°C sous agitation, et des échantillons filtrés de la phase aqueuse ont été analysés par ICP afin de déterminer la teneur en Li et Fe à différents intervalles de temps. Tel qu'illustré à la Figure 5, dans le cas sans $H_2O_2$ seulement 70% du lithium est extrait, tandis que l'addition de $H_2O_2$ permet d'atteindre 100% d'efficacité d'extraction de lithium. Cependant, dans les deux cas, des quantités importantes de $FePO_4$ (65% à 90%) sont également lixiviées dans la solution, indiquant un manque absolu de sélectivité entre l'extraction de Li et de Fe. Donc, en présence d'un acide fort tel que l'acide sulfurique, la séparation du fer du lithium nécessite l'application de réactifs chimiques et d'étapes supplémentaires (tels que des étapes d'ajustement contrôlé du pH et de filtration) après l'étape de récupération du lithium. En outre, contrairement au présent procédé, le fer récupéré doit être reconverti en $FePO_4$ avant son utilisation pour fabriquer un nouveau matériau d'électrode.

### Exemple 3

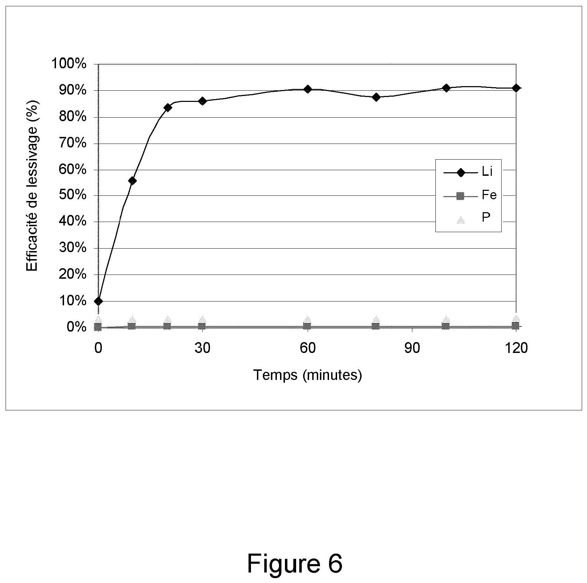

L'expérience présentée à l'Exemple 1 a été répétée mais cette fois avec cinq fois la quantité de solide. Par conséquent, 5 parties de matériau cathodique ont été mises en suspension dans 100 parties d'une solution aqueuse contenant 0,5% en poids de $H_2O_2$ dans un réacteur agité, du $CO_2$ gazeux étant barboté dans la solution sous une pression de 30 psi et à 25°C. Dans ce cas, le rapport molaire $LiFePO_4/H_2O_2$ était de 0,55, ce qui ne représente qu'une petite quantité excédentaire de 10% en termes de quantité stœchiométrique de $H_2O_2$ nécessaire pour une lixiviation complète de Li. La Figure 6 présente les résultats d'efficacité de lixiviation pour Li, Fe et P. L'efficacité de lixiviation totale pour le lithium était supérieure à 92%, alors que l'efficacité de lixiviation pour le Fe était de 1%. Ceci confirme de nouveau l'efficacité élevée et la sélectivité très élevée du présent procédé pour l'extraction du lithium, ainsi que la possibilité de récupérer la quasi-totalité du $FePO_4$ pour la fabrication de nouveaux matériaux d'électrode. Tel que décrit ici, le filtrat de cette opération, qui contient la solution de sel de lithium, peut ensuite être chauffé pour récupérer le lithium extrait sous forme de précipité de carbonate de lithium $Li_2CO_3$, qui est ensuite utilisé avec le $FePO_4$ récupéré pour fabriquer un nouveau matériau d'électrode.

La comparaison des résultats des exemples 1 et 3 confirme que la quantité d'agent oxydant ou réducteur peut être maintenue autour du rapport stœchiométrique. Un excès stœchiométrique de seulement 10% permet d'ailleurs une efficacité de lixiviation du lithium de plus de 92%. La personne versée dans l'art comprendra que, pour des raisons économiques, et puisque des quantités en excès d'agent oxydant ou réducteur peuvent être perdues dans les étapes suivantes du présent procédé, ledit agent peut être maintenu à un rapport stœchiométrique ou très près.

### Exemple 4

Afin de valider qu'une efficacité de lixiviation élevée peut toujours être atteinte à des rapports solide/liquide encore plus élevés, l'expérience de l'exemple 3 a été modifiée en utilisant 10 parties de matériau de cathode en suspension dans 100 parties d'une solution aqueuse contenant 1% en poids de $H_2O_2$ avec une pression en $CO_2$ de 30 psi. Encore une fois, des efficacités de lessivage de Li d'environ 90% ont été obtenus, alors que l'opération a entraîné des taux de lixiviation inférieur à 0,5% pour le Fe et inférieur à 2,5% pour P.

Ceci confirme à nouveau la sélectivité élevée du présent procédé d'extraction du lithium. En outre, comme le solide $FePO_4$ est maintenu intact, il peut être facilement récupéré par simple filtration. En fait, l'analyse de diffraction des rayons X de la phase solide filtrée a montré une teneur en $FePO_4$ de 97,7% et de 2,7% en $LiFePO_4$ suggérant une efficacité de lixiviation du Li encore plus élevée (voir Figure 2).

### Exemple 5

Dans cet exemple, 7.5 parties de LiOH solide ont été dissoutes dans 100 parties d'eau et ajoutées à un réacteur agité contenant une solution aqueuse de 35.5 parties de $(NH_4)_2S_2O_8$ dans 150 parties d'eau. Le mélange est agité durant 3 heures, le réacteur étant sous vide afin de faciliter l'évacuation du $NH_3$ gazeux libéré. La formation du $Li_2S_2O_8$ et l'élimination du $NH_3$ ont été suivis par surveillance du pH de la solution, qui a diminué de 14 à environ 10, indiquant la présence de très petites quantités de $NH_3$ et ainsi confirmant la complétion de la réaction selon l'équation suivante:

$$2\ LiOH + (NH_4)_2S_2O_8 \rightarrow Li_2S_2O_8 + 2\ NH_3\uparrow$$

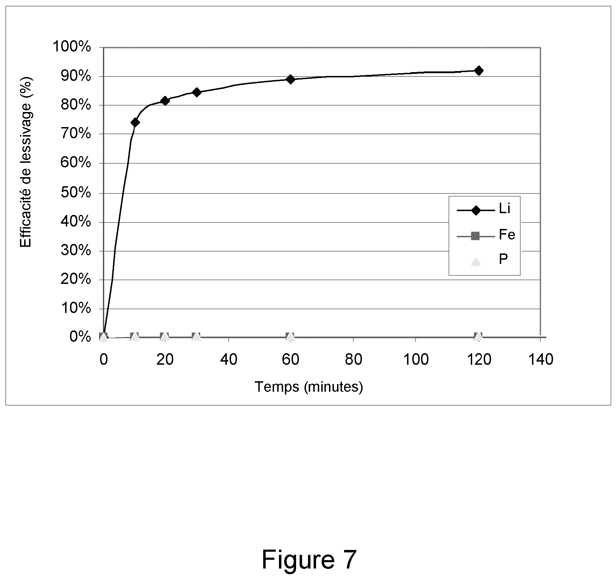

La solution contenant du $Li_2S_2O_8$ a ensuite été utilisée pour traiter 21 parties de matériau de cathode. Comme on peut voir à la Figure 7, après 2 heures, 92% du lithium ont été extraits du matériau de cathode, alors que moins de 1% de P et presqu'aucun Fe n'ont été trouvés dans la solution, démontrant encore une sélectivité très élevée pour l'extraction du lithium comme pour $H_2O_2$ et $CO_2$.

L'analyse de diffraction des rayons X du solide filtré a confirmé la récupération de Fe et P en tant que $FePO_4$

dans la phase solide (plus de 99,7% de teneur en $FePO_4$).

*Exemple 6*

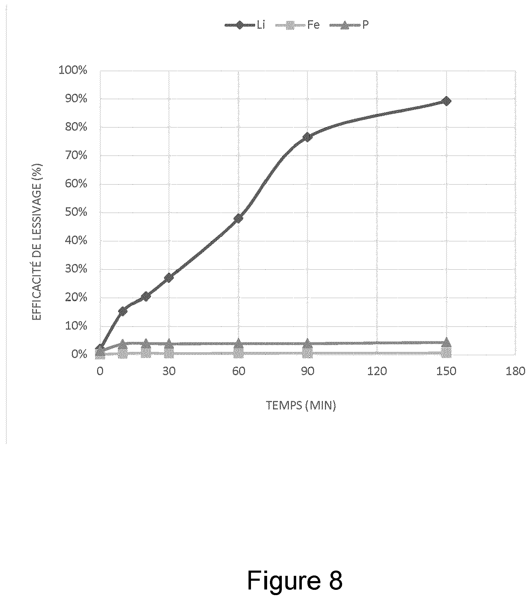

L'expérience présentée à l'Exemple 1 a été répétée par dispersion d'une partie du même type de matériau de cathode contenant majoritairement du $LiFePO_4$, dans 100 parties d'eau, et agitation et barbotage de $CO_2$ gazeux, le tout dans un réacteur. Cette fois, le peroxyde d'hydrogène a été remplacé par l'ozone comme agent oxydant. De l'ozone gazeux (généré par un générateur d'ozone alimenté en oxygène) a été injecté dans la dispersion aqueuse à un début d'environ 4 gr/h. La pression du réacteur a été maintenue à 5 psi et la température de réaction était d'environ 25 °C. Comme on peut observer à la Figure 8, l'analyse par ICP d'échantillons récoltés toutes les 30 minutes démontre qu'après 150 minutes, environ 90% du lithium a été extrait en tant que $LiHCO_3$. Le fait que pas plus de 0,5% du fer et moins de 4,5% du phosphore ont été extraits pendant cette même période montre que la méthode est très sélective ainsi que très efficace.

*Exemple 7*

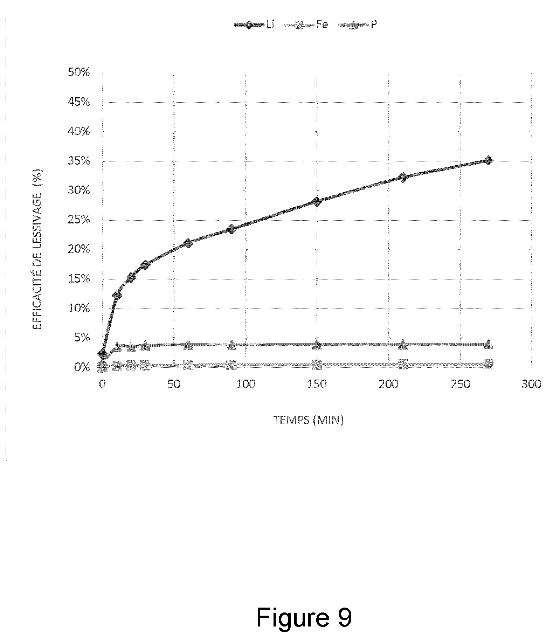

L'essai présenté à l'Exemple 6 a été répété en utilisant un agent oxydant différent, dans ce cas-ci, de l'oxygène gazeux. Ici encore, une partie du même type de matériau de cathode contenant majoritairement du $LiFePO_4$ a été dispersée dans 100 parties d'eau, la dispersion étant agitée dans un réacteur. De l'oxygène et du $CO_2$ gazeux ont été barbotés dans le réacteur à une débit d'environ 1,8 L/min en maintenant la pression du réacteur à 30 psi et sa température à environ 25 °C. L'efficacité de lessivage de Li, Fe et P en fonction du temps est présentée à la Figure 9. On peut observer que l'utilisation d'oxygène gazeux permet d'obtenir une extraction sélective du Li étant donné que sont percentage d'extraction augmente de façon constante au fur et à mesure que la réaction progresse (atteignant plus de 35% après 270 minutes) tandis que les percentages d'extraction de Fe et P atteignent très rapidement un plateau et restent à environ 0,5% pour le fer et moins de 4% pour le phosphore. Les cinétiques de réaction semblent être plus lentes qu'avec l'ozone ou $H_2O_2$, probablement dus à la solubilité beaucoup plus basse de l'oxygène gazeux dans l'eau. Par contre, ces résultats montrent la faisabilité de la réaction utilisant l'oxygène gazeux comme agent oxydant. Il est clair que la cinétique de réaction et l'efficacité de l'extraction peuvent être augmentés par des moyens usuels utilisés dans l'amélioration de dispersion gazeuse dans un réacteur.

*Exemple 8*

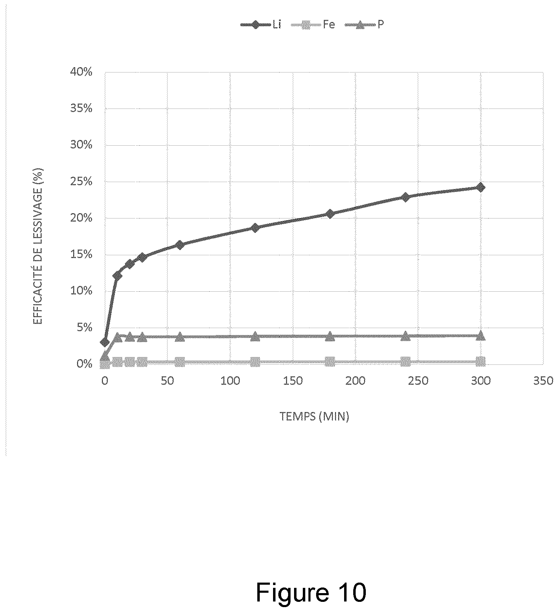

L'expérience présentée à l'Exemple 7 a été répétée sous les mêmes conditions mais en remplaçant l'oxygène par l'air comme agent oxydant. Les résultats (présentés à la Figure 10) montrent encore la faisabilité de l'extraction sélective du lithium, malgré que la cinétique soit plus lente que celle obtenue avec l'oxygène puisque l'efficacité de lessivage était d'environ 24% après 300 minutes de réaction. Encore, les taux de lessivage de Fe et P étaient très bas (moins de 0.4% et 4%, respectivement) ce qui confirme la haute sélectivité de l'extraction du Li. Comme c'est le cas pour l'oxygène, les résultats confirment que l'extraction sélective du Li est tout à fait possible en utilisant de l'air comme agent oxydant.

Par conséquent, le présent procédé fournit une lixiviation sélective et efficace du lithium compris dans un matériau d'électrode usé récupéré, sans utilisation d'acide fort ou de conditions critiques de pression et de températures. Cela permet la régénération du matériau électrochimiquement actif des batteries au lithium à des coûts économiques et environnementaux inférieurs, par rapport aux méthodes conventionnelles.

**Revendications**

**1.** Procédé pour le recyclage d'un matériau électrochimiquement actif, le procédé comprenant les étapes de :

a) réaction du matériau électrochimiquement actif avec un agent oxydant ou un agent réducteur dans un solvant excluant la présence d'un acide fort, pour produire un sel de lithium et un précipité de précurseur du matériau électrochimiquement actif;
b) séparation du précipité de précurseur du matériau électrochimiquement actif et du sel de lithium en solution; et
c) régénération du matériau électrochimiquement actif à partir du précurseur du matériau électrochimiquement actif,

dans lequel le matériau électrochimiquement actif est $LiFePO_4$ et le précurseur du matériau électrochimiquement actif est $FePO_4$.

**2.** Le procédé de la revendication 1, dans lequel l'étape (a) comprend en outre l'injection de $CO_2$ gazeux.

**3.** Le procédé de la revendication 1 ou 2, dans lequel l'étape (c) comprend le chauffage du sel de lithium en solution et la récupération de $CO_2$ gazeux et d'un sel de lithium recyclé.

**4.** Le procédé de l'une quelconque des revendications 1 à 3, dans lequel l'agent oxydant comprend du peroxyde d'hydrogène.

**5.** Le procédé de l'une quelconque des revendications 1 à 3, dans lequel l'agent oxydant comprend de l'ozone.

**6.** Le procédé de l'une quelconque des revendications 1 à 3, dans lequel l'agent oxydant comprend de l'oxygène.

**7.** Le procédé de la revendication 1, dans lequel l'agent oxydant comprend un sel de persulfate.

**8.** Le procédé de la revendication 7, dans lequel l'étape (c) comprend la soumission du sel de lithium à une électrolyse, une solution de sel de sodium, ou une injection de $CO_2$ et la récupération d'un sel de lithium recyclé.

**9.** Le procédé de l'une quelconque des revendications 3 et 8, dans lequel le sel de lithium recyclé est utilité pour régénérer le matériau électrochimiquement actif.

**10.** Le procédé de l'une quelconque des revendications 1 à 9, dans lequel le solvant est l'eau.

**11.** Procédé pour le recyclage d'un matériau actif d'électrode d'une batterie au lithium, le procédé comprenant les étapes de :

- réaction du matériau actif d'électrode avec du $CO_2$ dans un milieu aqueux et en présence d'un agent oxydant ou réducteur sans ajout d'acide fort, afin de séparer le contenu en lithium sous forme de bicarbonate de lithium dans une phase liquide et de récupérer le reste du matériau actif d'électrode sous forme de phase solide, la pression de $CO_2$ se situant entre 1 et 10 atm et la température de réaction se situant entre 10 et 30 °C; et
- traitement de la phase liquide afin de récupérer un sel de lithium pour recyclage dans la fabrication de nouveau matériau d'électrode par réaction avec les autres éléments de matériau actif d'électrode récupérés de la phase solide.

**12.** Le procédé de la revendication 11, dans lequel la pression de $CO_2$ se situe entre 1 et 5 atm.

**13.** Le procédé de la revendication 11, dans lequel la température de réaction se situe 20 et 25 °C.

**14.** Le procédé de l'une quelconque des revendications 11 à 13, dans lequel la température de réaction est sous la température ambiante.

**15.** Le procédé de l'une quelconque des revendications 11 à 14, dans lequel l'agent oxydant ou réducteur est le peroxyde d'hydrogène, ledit peroxyde d'hydrogène étant utilisé en quantité stoechiométrique ou légèrement excédentaire par rapport à la quantité de matériau actif d'électrode.

**16.** Le procédé de l'une quelconque des revendications 11 à 15, dans lequel le matériau actif d'électrode est $LiFePO_4$, dans lequel la phase solide contient du $FePO_4$ à pureté élevée, le $FePO_4$ maintenant sa structure crystalline.

**17.** Le procédé de l'une quelconque des revendications 11 à 16, dans lequel la phase liquide est chauffée à température élevée, formant un précipité de carbonate de lithium, lequel est séparé, séché et recyclé dans la fabrication de nouveau matériau actif d'électrode, et dans lequel le $CO_2$ gazeux libéré et une solution contenant du carbonate et du bicarbonate de lithium résiduels utilisés dans le procédé recyclage de matériau actif d'électrode.

**18.** Le procédé de la revendication 17, dans lequel la phase liquide est chauffée à environ 90 °C.

**Patentansprüche**

**1.** Verfahren zum Recycling eines elektrochemisch aktiven Materials, wobei das Verfahren die Schritte umfasst:

a) Reagieren des elektrochemisch aktiven Materials mit einem Oxidationsmittel oder einem Reduktionsmittel in einem Lösungsmittel, das die Anwesenheit einer starken Säure ausschließt, um ein Lithiumsalz und ein Vorläuferpräzipitat des elektrochemisch aktiven Materials zu erzeugen;
b) Trennen des Vorläuferpräzipitats des elektrochemisch aktiven Materials und des Lithiumsalzes in Lösung; und
c) Regenerieren des elektrochemisch aktiven Materials aus dem Vorläufer des elektrochemisch aktiven Materials,

wobei das elektrochemisch aktive Material $LiFePO_4$ ist und der Vorläufer des elektrochemisch aktiven Materials $FePO_4$ ist.

2. Verfahren nach Anspruch 1, wobei Schritt (a) ferner das Einleiten von gasförmigem $CO_2$ umfasst.

3. Verfahren nach Anspruch 1 oder 2, wobei Schritt (c) das Erhitzen des Lithiumsalzes in Lösung und die Rückgewinnung von gasförmigem $CO_2$ und eines recycelten Lithiumsalzes umfasst.

4. Verfahren nach einem der Ansprüche 1 bis 3, wobei das Oxidationsmittel Wasserstoffperoxid umfasst.

5. Verfahren nach einem der Ansprüche 1 bis 3, wobei das Oxidationsmittel Ozon umfasst.

6. Verfahren nach einem der Ansprüche 1 bis 3, wobei das Oxidationsmittel Sauerstoff umfasst.

7. Verfahren nach Anspruch 1, wobei das Oxidationsmittel ein Persulfatsalz umfasst.

8. Verfahren nach Anspruch 7, wobei Schritt (c) umfasst, dass das Lithiumsalz einer Elektrolyse, einer Natriumsalzlösung oder einer Einleitung von $CO_2$ unterzogen wird und das Rückgewinnen eines recycelten Lithiumsalzes.

9. Verfahren nach einem der Ansprüche 3 und 8, wobei das recycelte Lithiumsalz zur Regeneration des elektrochemisch aktiven Materials verwendet wird.

10. Verfahren nach einem der Ansprüche 1 bis 9, wobei das Lösungsmittel Wasser ist.

11. Verfahren zum Recycling eines aktiven Elektrodenmaterials einer Lithiumbatterie, wobei das Verfahren die Schritte umfasst:

    - Reagieren des aktiven Elektrodenmaterials mit $CO_2$ in einem wässrigen Medium und in Gegenwart eines Oxidations- oder Reduktionsmittels ohne Zugabe einer starken Säure, um den Lithiumgehalt in Form von Lithiumbicarbonat in einer flüssigen Phase abzutrennen und den Rest des aktiven Elektrodenmaterials als feste Phase zurückzugewinnen, wobei der $CO_2$-Druck zwischen 1 und 10 atm liegt und die Reaktionstemperatur zwischen 10 und 30 °C liegt; und
    - Behandeln der flüssigen Phase, um ein Lithiumsalz für das Recycling bei der Herstellung von neuem Elektrodenmaterial durch Reaktion mit den anderen Elementen des aktiven Elektrodenmaterials, die aus der festen Phase zurückgewonnen wurden, zurückzugewinnen.

12. Verfahren nach Anspruch 11, wobei der $CO_2$-Druck zwischen 1 und 5 atm liegt.

13. Verfahren nach Anspruch 11, wobei die Reaktionstemperatur zwischen 20 und 25 °C liegt.

14. Verfahren nach einem der Ansprüche 11 bis 13, wobei die Reaktionstemperatur unterhalb der Raumtemperatur liegt.

15. Verfahren nach einem der Ansprüche 11 bis 14, wobei das Oxidations- oder Reduktionsmittel Wasserstoffperoxid ist, wobei das Wasserstoffperoxid in einer stöchiometrischen oder leicht überschüssigen Menge in Bezug auf die Menge des aktiven Elektrodenmaterials verwendet wird.

16. Verfahren nach einem der Ansprüche 11 bis 15, wobei das aktive Elektrodenmaterial $LiFePO_4$ ist, wobei die feste Phase $FePO_4$ in erhöhter Reinheit enthält, wobei das $FePO_4$ seine kristalline Struktur beibehält.

17. Verfahren nach einem der Ansprüche 11 bis 16, wobei die flüssige Phase auf eine hohe Temperatur erhitzt wird, wodurch ein Lithiumcarbonat-Präzipitat gebildet wird, das abgetrennt, getrocknet und bei der Herstellung von neuem aktiven Elektrodenmaterial recycelt wird, und wobei das freigesetzte gasförmige $CO_2$ und eine Lösung, die restliches Lithiumcarbonat und -bicarbonat enthält, in dem Recyclingverfahren von aktivem Elektrodenmaterial verwendet werden.

**18.** Verfahren nach Anspruch 17, wobei die flüssige Phase auf etwa 90 °C erhitzt wird.

**Claims**

**1.** Process for the recycling of an electrochemically active material, the process comprising the steps of:

   a) reacting the electrochemically active material with an oxidizing agent or a reducing agent in a solvent excluding the presence of a strong acid to produce a lithium salt and an electrochemically active material precursor precipitate;
   b) separating the electrochemically active material precursor precipitate from the lithium salt in solution; and
   c) regenerating the electrochemically active material from the electrochemically active material precursor,

   wherein the electrochemically active material is $LiFePO_4$ and the electrochemically active material precursor is $FePO_4$.

**2.** The process of claim 1, wherein step (a) further comprises injecting gaseous $CO_2$.

**3.** The process of claim 1 or 2, wherein step (c) comprises heating the lithium salt in solution and recovering gaseous $CO_2$ and a recycled lithium salt.

**4.** The process of any one of claims 1 to 3, wherein the oxidizing agent comprises hydrogen peroxide.

**5.** The process of any one of claims 1 to 3, wherein the oxidizing agent comprises ozone.

**6.** The process of any one of claims 1 to 3, wherein the oxidizing agent comprises oxygen.

**7.** The process of claim 1, wherein the oxidizing agent comprises a persulfate salt.

**8.** The process of claim 7, wherein step (c) comprises submitting the lithium salt to an electrolysis, a sodium salt solution, or a $CO_2$ injection and recovering a recycled lithium salt.

**9.** The process of any one of claims 3 and 8, wherein the recycled lithium salt is used to regenerate the electrochemically active material.

**10.** The process of any one of claims 1 to 9, wherein the solvent is water.

**11.** Process for the recycling of an active electrode material from a lithium battery, the process comprising the steps of:

   - reacting the with $CO_2$ in an aqueous medium and in the presence of an oxidizing or reducing agent without strong acid addition, in order to separate the lithium content in the form of lithium bicarbonate in a liquid phase and recovering the rest of the active electrode material in the form of a solid phase, the $CO_2$ pressure being between 1 and 10 atm and the reaction temperature being between 10 and 30 °C; and
   - treating the liquid phase to recover a lithium salt for recycling in the manufacture of new electrode material by reacting with the other elements of the active electrode material recovered in the solid phase.

**12.** The process of claim 11, wherein the $CO_2$ pressure is between 1 and 5 atm.

**13.** The process of claim 11, wherein the reaction temperature is between 20 and 25 °C.

**14.** The process of any one of claims 11 to 13, wherein the reaction temperature is below room temperature.

**15.** The process of any one of claims 11 to 14, wherein the oxidizing or reducing agent is hydrogen peroxide, said hydrogen peroxide being used in stoichiometric or slight excess amount with respect to the quantity of active electrode material.

16. The process of any one of claims 11 to 15, wherein the active electrode material is LiFePO$_4$, wherein the solid phase contains high purity FePO$_4$, the FePO$_4$ maintaining its crystalline structure.

17. The process of any one of claims 11 to 16, wherein the liquid phase is heating at high temperature, forming lithium carbonate precipitate, which is separated, dried and recycled in the manufacture of new active electrode material, and wherein the liberated gaseous CO$_2$ and a solution containing residual lithium carbonate and bicarbonate are used in the process for the recycling of active electrode material.

18. The process of claim 17, wherein the liquid phase is heated at about 90 °C.

Figure 1

| Nom de phase | Contenu |
|---|---|
| Hétérosite (FePO₄) | 97.3% |
| Triphylite (LiFePO₄) | 2.3% |

# Figure 2

Figure 3

Figure 4

Figure 5

Figure 6

Figure 7

Figure 8

Figure 9

Figure 10

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 62339470 B
- US 8067107 B

- US 2013287654 A

**Littérature non-brevet citée dans la description**

- **LINDA GAINES ; ROY CUENCA.** Cost of lithium-Ion Batteries for Vehicles. Argonne National Laboratory, Septembre 2000
- **YUANLONG LIU et al.** *RSC Advances,* 2014, vol. 97, 54525-54531
- **TONG DONGGE et al.** *Journal of Chemical Industry and Engineering (CHINA),* 2005, vol. 56 (10), 4
- **LINDA GAINES, JOHN.** Life-cycle analysis for Lithium-ion batteries production and recycling. *90th Annual Meeting of the Transportation Research Board, Washington D.C,* Janvier 2011

- **P. ZHAN et al.** *Hydrometallurgy,* 1998, vol. 47, 259-271
- **D.P. MANTUANO et al.** *J. Power Sources,* 2006, vol. 159, 1510-1518
- **C.K. LEE ; K.I. RHEE.** *Hydrometallurgy,* 2003, vol. 68, 5-10
- **S. CASTILLO et al.** *Journal of Power Sources,* 2002, vol. 112, 247-254
- **J.S. SOHN et al.** *Advanced Processing of Metals and Materials, Sohn International Symposium, Proceedings, San Diego, CA, USA,* 27 Août 2006, vol. 6, 135-143